# EUROPEAN PATENT SPECIFICATION

(11) **EP 2 127 960 B1**
(45) Date of publication and mention of the grant of the patent: **21.11.2012**
(21) Application number: 09161498.2
(22) Date of filing: 29.05.2009
(51) Int. Cl.: B60R 21/232, B60R 21/2338

(54) **Vehicle with an airbag device**
Fahrzeug mit einer Airbagvorrichtung
Véhicule avec un dispositif d'airbag

(30) Priority: 30.05.2008 JP 2008143713
(43) Date of publication of application: 02.12.2009
(73) Proprietor: Honda Motor Co., Ltd., Minato-ku Tokyo 107-8556 (JP); Autoliv Development AB, 447 83 Vårgårda (SE)
(72) Inventor: Obayashi, Yuya, Saitama 351-0193 (JP); Higano, Makoto, Kanagawa 222-8580 (JP)
(74) Representative: Prechtel, Jörg

(56) References cited:
- US-A1- 2006 119 084
- US-A1- 2006 138 755
- US-A1- 2007 252 366
- US-A1- 2008 290 634

## Description

### BACKGROUND

### 1. Technical Field

The present invention relates to a vehicle with a vehicle airbag device which is expanded in the event of a shock so as to protect a passenger.

### 2. Related Art

A vehicle according to the preamble of claim 1 is disclosed in US2006/0138755 A1.

As a vehicle airbag device, there is known a curtain airbag which is expanded to the inside of a side wall of a vehicle body so as to protect a passenger's side head portion. Such an airbag device is disclosed in, for example, Japanese Unexamined Patent Application, First Publication No. 2004-338542 or Japanese Patent Publication No. 3554719.

The airbag device has a configuration in which the airbag device is accommodated in a portion ranging from a front pillar to a roof side rail (upper portion of vehicle body opening section) in the state where an airbag pocket section is folded and a high-pressure gas is discharged from an inflator in the event of a shock so as to expand the airbag pocket section.

In the airbag pocket section attached to the front pillar and the roof side rail, the vehicle-interior-side portion thereof is covered by an interior cover member such as a garnish or a roof lining. At the time when the airbag pocket section is expanded, the interior cover member is pressed and opened by an expanding pressure caused by a high-pressure gas.

In the airbag device, since the interior cover member is pressed and opened by the expanding pressure of the airbag pocket section, a gap in the vicinity of an entrance opening end of the interior cover member becomes small, where an expanding pressure application area is small in the entrance opening end.

For this reason, at the time when the airbag pocket section is inflated and expanded by increasing a gas pressure, a local load may act on an end (end in longitudinal direction) of the airbag pocket section along a vehicle body opening section.

Particularly, in the case where the inflation absorbing section and the gas introduction section, which are expanded by increasing a gas pressure so as to protect a passenger, are separated by a notch portion (separation section) at the end of the airbag pocket section, there is a problem in that a large stress may easily act on the peripheral portion of the notch portion.

### SUMMARY

Therefore, an object of the invention is to provide a vehicle with a vehicle airbag device in which it is possible to suppress a load acting on an end of an airbag pocket section along a vehicle body opening section at the time when the airbag pocket section is inflated and expanded.

The invention provides a vehicle with a vehicle airbag device including: an inflator that generates a high-pressure gas in the event of a shock; an airbag pocket section that includes an inflation absorbing section which expands to protect a passenger when a gas is introduced into the inflation absorbing section and a gas introduction section which connects the inflation absorbing section with the inflator, the airbag pocket section being accommodated in an upper portion of a vehicle body opening section in a folded state and expanding in a downward direction when the high-pressure gas generated from the inflator is introduced into the airbag pocket section; a separation section that is provided at an end of the airbag pocket section along the vehicle body opening section, and that separates the inflation absorbing section from the gas introduction section; an upper edge section adjacent to the gas introduction section of the separation section; a lower edge section adjacent to the inflation absorbing section; and a connection section that connects the upper edge section with the lower edge section in a suspending manner.

When a high-pressure gas is discharged from an inflator in the event of a shock, the high-pressure gas is introduced into an inflation absorbing section of an end of an airbag pocket section along a vehicle body opening section by way of a separation section, and hence the inflation absorbing section is inflated and expanded.

At this time, since the end of the airbag pocket section is restrained by an interior cover member, a load acts on the separation section of the airbag pocket section. The load is received by a connection section which connects the upper edge section and the lower edge section of the separation section to each other in a suspending manner.

It is preferable that the vehicle airbag device of the aspect of the invention further include: a control chamber provided at the airbag pocket section and connected to the inflation absorbing section. In the vehicle airbag device, a pressure of the gas introduced into the control chamber is regulated at an early stage of the expansion of the airbag pocket section. In the vehicle airbag device, a pressure of the gas introduced into the control chamber increases at a late stage of the expansion of the airbag pocket section, and the control chamber buffers pressure increase in the inflation absorbing section.

At the early stage of the expansion of the airbag pocket section, since the pressure of the gas introduced into the control chamber is regulated, a large force acts on the separation section of the end of the airbag pocket section in a separation direction. The force is received by the connection section.

The separation section is constituted of a notch portion that is formed by notching an end of the airbag pocket section toward a center thereof, and the connection section be constituted of a band-shaped cloth that has a first side and a second side and is formed so as to be separated from a base cloth of the airbag pocket section. In the vehicle airbag device, the first side of the band-shaped cloth is connected to the upper edge section and the second side of the band-shaped cloth is connected to the lower edge section so that the band-shaped cloth extends in a flat plate shape without twist from the state where the center of the band-shaped cloth is bent at the time when the airbag pocket section is expanded.

At the time when the airbag pocket section is inflated and expanded, a band-shaped cloth extends in a flat plate shape from the state where the center of the band-shaped cloth is bent, thereby regulating an entrance opening of the notch portion.

In addition, the center of the band-shaped cloth is maintained to be bent when the airbag pocket section is folded.

It is preferable that, in the vehicle airbag device of the aspect of the invention, the band-shaped cloth include a central bent portion that is positioned substantially at a central area in a longitudinal direction of the band-shaped cloth, and the notch portion include a peripheral portion. In the vehicle airbag device, the central bent portion is disposed so as to be closer to the end of the airbag pocket section than the peripheral portion of the notch portion.

At the time when the airbag pocket section is inflated and expanded, the band-shaped cloth extends in a flat plate shape before the peripheral portion of the notch portion is completely opened. At this time, a load acting on the notch portion is received by the band-shaped cloth.

According to the invention, since the connection section is capable of receiving a load acting on the separation section of the end at the time when the airbag pocket section is inflated and expanded, it is possible to reliably reduce a load acting on the end of the airbag pocket section.

According to the invention, since the control chamber in which the pressure of the gas introduced into the control chamber is limited at an early stage of the expansion of the airbag pocket section is applied to the vehicle airbag device, it is possible to effectively protect the airbag pocket section from a load in such a manner that the connection section reliably receives a large load acting on the separation section at an early stage of the expansion of the airbag pocket section.

According to the invention, since the first side of the band-shaped cloth is connected to the upper edge section of the notch portion and the second side of the band-shaped cloth is connected to the lower edge section of the notch portion so that the band-shaped cloth extends in a flat plate shape without a twist from the state where the center of the band-shaped cloth is bent at the time when the airbag pocket section is expanded, it is possible to reliably prevent an entrance opening of the notch portion at the time when the airbag pocket section is expanded.

Furthermore, in the case where an airbag body is accommodated in an upper edge of the vehicle body opening section in a folded state, it is possible to easily fold the airbag body together with a base cloth of the airbag pocket section in the state where the band-shaped cloth is folded into two parts.

According to the invention, since the central bent portion of the band-shaped cloth is disposed to be closer to the end of the airbag pocket section than the peripheral portion of the notch portion, it is possible to reliably prevent the case where a large load acts on the peripheral portion of the notch portion by means of the band-shaped cloth.

### BRIEF DESCRIPTION OF THE DRAWINGS

FIG 1 is a front view showing a vehicle interior in the state where an airbag device according to an embodiment of the invention is accommodated.
FIG 2 is a front view showing the airbag device according to the embodiment in the state where the airbag device is expanded.
FIG. 3 is an enlarged view showing part A of FIG. 2 according to the embodiment.

### DESCRIPTION OF EXEMPLARY EMBODIMENTS

Hereinafter, an exemplary embodiment of the invention will be described with reference to the drawings.

In addition, in the following description, a longitudinal direction and a vertical direction respectively correspond to a longitudinal direction and a vertical direction of a vehicle body unless a different case is described.

In addition, in the drawings, the arrows F and U respectively correspond to a forward direction and an upward direction.

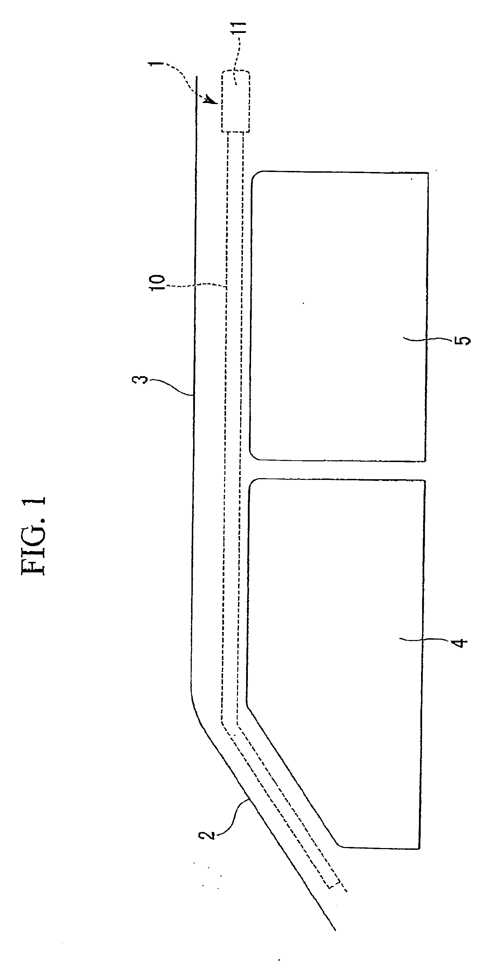

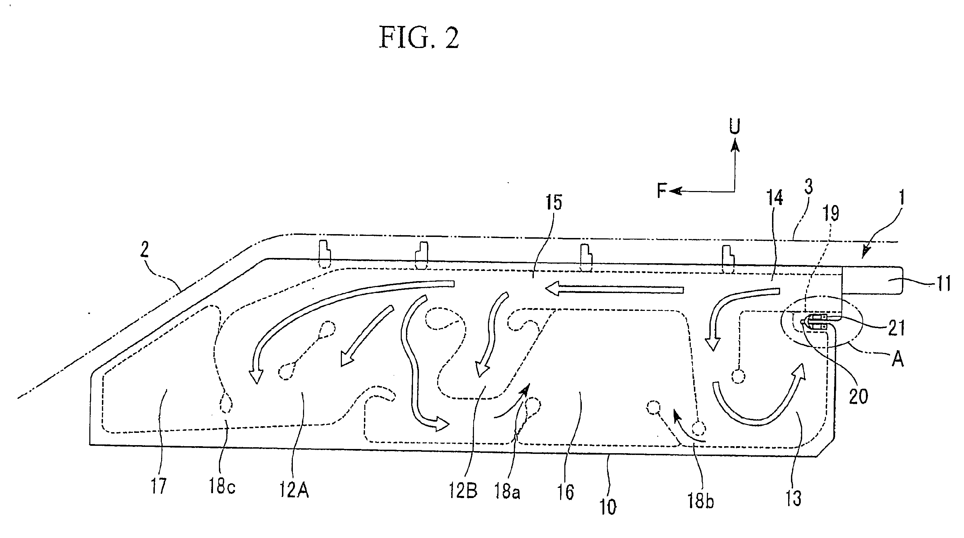

FIG. 1 shows an accommodation state of an airbag device 1. FIG 2 shows an expansion state of the airbag device 1.

The airbag device 1 includes an airbag pocket section 10 and an inflator 11. The airbag pocket section 10 is attached to a portion (upper portion of vehicle body opening section) ranging from a front pillar 2 to a roof side rail 3 in a vehicle interior while being folded in a vertical direction. The an inflator 11 generates a high-pressure gas in the event of a shock.

A vehicle-interior-side portion of the airbag pocket section 10 attached to the front pillar 2 and the roof side rail 3 in a folded state is covered by an interior cover member (not shown) such as a garnish or a roof lining.

In the event of a shock, the gas generated from the inflator 11 is introduced into the airbag pocket section 10, the airbag pocket section 10 is inflated and expanded in a downward direction while pressing the lower edge of the interior cover member to be opened.

In addition, the reference numerals 4 and 5 in FIG. 1 respectively indicate a front side glass and a rear side glass of the vehicle body.

As shown in FIG 2, the peripheral portion and the appropriate portions of the airbag pocket section 10 are sutured by two sheets of base cloths which are formed in a substantially rectangular shape so as to extend in a longitudinal direction of the vehicle body.

The airbag pocket section 10 includes front-seat inflation absorbing sections 12A and 12B which are inflated and expanded from a side portion of a front seat in the event of a shock so as to protect a passenger sitting in the front seat, and a rear-seat inflation absorbing section 13 (inflation absorbing section) which is inflated and expanded from a side portion of a rear seat in the event of a shock so as to protect a passenger sitting in the rear seat.

In addition, the rear-seat inflation absorbing section 13 is provided in the rearmost end of the airbag pocket section 10.

The inflator 1 is connected to the rear end of the airbag pocket section 10.

The airbag pocket section 10 is provided with a rear gas introduction section 14 which is connected to the inflator 11 and the rear-seat inflation absorbing section 13, and a front gas introduction section 15 which branches from the rear gas introduction section 14 so as to connect the inflator 11 to the front-seat inflation absorbing sections 12A and 12B.

Additionally, in the airbag pocket section 10, a first control chamber 16 is provided between the front-seat inflation absorbing section 12B and the rear-seat inflation absorbing section 13, and a second control chamber 17 (control chamber) is provided on the front side of the front-seat inflation absorbing section 12A.

The first control chamber communicates with the front-seat inflation absorbing section 12B and the rear-seat inflation absorbing section 13 via narrow passages 18a and 18b, and the second control chamber 17 communicates with the front-seat inflation absorbing section 12A via a narrow passage 18c.

By means of the function of the narrow passages 18a, 18b, and 18c, the pressure of the gas introduced into the first control chamber 16 and the second control chamber 17 is regulated from the adjacent inflation absorbing sections 12B, 13, and 12A at the early stage of the expansion of the airbag pocket section 10. At a late stage of the expansion of the airbag pocket section 10, the gas is introduced into the first control chamber 16 and the second control chamber 17 from the adjacent inflation absorbing sections 12B, 13, and 12A, and the pressure of the first control chamber 16 and the second control chamber 17 thereby increases.

The inflation absorbing sections 12B, 13, and 12A prompt an initial expansion of the airbag pocket section 10, and suppress an excessive increase of the gas at a late stage of the expansion of the airbag pocket section.

The rear-seat inflation absorbing section 13 and the rear gas introduction passage 14, disposed above the rear-seat inflation absorbing section 13, of the airbag pocket section 10 are defined by a defining wall 19. A notch portion 20 serving as a separation section is provided at a position right below the defining wall 19 of the rear end of the airbag pocket section 10 so as to separate the rear-seat inflation absorbing section 13 from the rear gas introduction section 14.

The notch portion 20 is horizontally notched by a predetermined depth in a forward direction from the rear end of the airbag pocket section 10. The rear-seat inflation absorbing section 13 is expanded in a downward direction, and the rear edge thereof is expanded in a backward direction of the vehicle body.

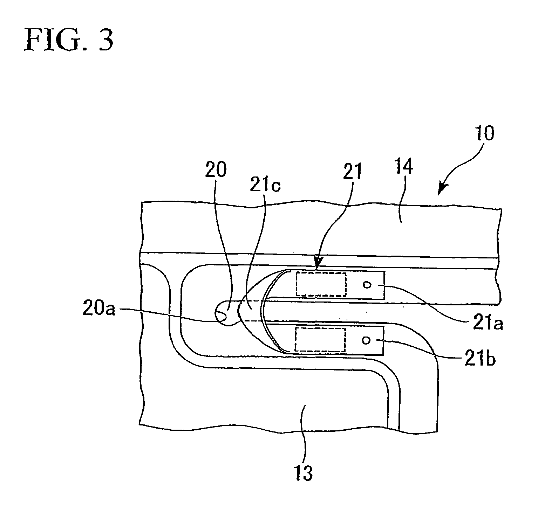

FIG 3 is an enlarged view showing a peripheral portion of the notch portion 20 of the airbag pocket section 10.

As shown in the FIG 3, the upper edge section and the lower edge section of the notch portion 20 of the airbag pocket section 10 are connected to a band-shaped cloth 21 (connection section) by means of a suturing operation.

The band-shaped cloth 21 is formed of a substantially rectangular fabric having strength larger than that of the base cloth of the airbag pocket section 10, where a first side 21a thereof is sutured along the upper edge of the notch portion 20 and a second side 21b thereof is sutured along the lower edge of the notch portion 20 with a longitudinal central area 21c (central bent portion) interposed therebetween.

When the notch portion 20 is closed (in the state shown in FIG 3), the band-shaped cloth 21 is folded and bent at the central area 21c. When the notch portion 20 is opened with the expansion of the airbag pocket section 10, the band-shaped cloth 21 extends in a flat plate shape without a twist from the state where the center of the band-shaped cloth 21 is bent.

In addition, in the state where the notch portion 20 is closed, the central bent portion of the central area 21c of the band-shaped cloth 21 is located closer to the rear end of the airbag pocket section 10 than a peripheral portion 20a of the notch portion 20.

In the above-described configuration, when the inflator 11 discharges a high-pressure gas in the event of a shock, the airbag pocket section 10 is expanded in a downward direction while pressing the interior cover member to be opened.

At the early stage of the expansion of the airbag pocket section 10, a high-pressure gas is introduced into the rear-seat inflation absorbing section 13 and the front-seat inflation absorbing sections 12A and 12B via the rear gas introduction section 14 and the front gas introduction section 15. At this time, an amount of the gas introduced into the first control chamber 16 and the second control chamber 17 is limited by the narrow passages 18a, 18b, and 18c.

Accordingly, at the early stage of the expansion of the airbag pocket section 10, the inside of the gas introduction sections 14 and 15 is maintained in a high pressure state, thereby prompting an early expansion of the rear-seat inflation absorbing section 13 and the front-seat inflation absorbing sections 12A and 12B.

At the early stage of the expansion of the airbag pocket section 10, the airbag pocket section 10 passes through a comparatively small gap of the interior cover member when the rear end of the airbag pocket section 10 protrudes while pressing the interior cover member to be opened. At this time, the rear end is pressed.

For this reason, the gas introduction sections 14 and 15 are maintained in a high pressure state as described above, and the rear end of the airbag pocket section 10 performs an expansion movement in which the notch portion 20 is opened.

At this time, when the rear end of the airbag pocket section 10 is deformed to open the notch portion 20, the band-shaped cloth 21 is deformed in a following manner so as to extend the central bent portion.

When the central bent portion of the band-shaped cloth 21 extends in this manner, a tension occurs in a vertical direction of the band-shaped cloth 21, and the tension regulates an entrance opening of the notch portion 20.

In addition, at the late stage of the expansion of the airbag pocket section 10, after the rear-seat inflation absorbing section 13 and the front-seat inflation absorbing sections 12A and 12B are sufficiently expanded, an excessive gas is introduced from the inflation absorbing sections 13, 12A, and 12B into the first control chamber 16 and the second control chamber 17. Accordingly, the gas pressure of the inflation absorbing sections 13, 12A, and 12B is controlled.

Since the airbag device 1 is capable of receiving a load acting on the notch portion 20 of the rear end of the airbag pocket section 10 by means of the separate band-shaped cloth 21 when the airbag pocket section 10 is expanded as described above, it is possible to reduce a load acting on the notch portion 20, and thus to reliably protect the airbag pocket section 10.

Additionally, in the case of the airbag device 1, since the substantially rectangular band-shaped cloth 21 is folded into two parts and is connected to the upper edge section and the lower edge section of the notch portion 20 so as to extend in a flat plate shape without a twist from the state where the center of the band-shaped cloth 21 is bent at the time when the airbag pocket section 10 is expanded, it is advantageous in that the airbag pocket section 10 can be easily folded together with the base cloth in the state where the band-shaped cloth 21 is folded into two parts at the time of folding the airbag pocket section 10.

Furthermore, in the case of the airbag device 1, since the band-shaped cloth 21 is attached to the notch portion 20 while being bent along the notch portion 20, the band-shaped cloth 21 does not disturb the accommodation or expansion of the airbag pocket section 10.

Furthermore, in the case of the airbag device 1, since the central bent portion of the band-shaped cloth 21 is located closer to the rear end of the airbag pocket section 10 than the peripheral portion 20a of the notch portion 20, it is possible to reliably receive a load by means of the band-shaped cloth 21 before the notch portion 20 is completely pressed and opened when the airbag pocket section 10 is expanded.

Moreover, the invention is not limited to the above-described embodiment, but may be modified into various forms without departing from the scope of the invention.

## Claims

1. A vehicle having a curtain type vehicle airbag device, the vehicle airbag device (1) comprising:
an inflator (11) that generates a high-pressure gas in the event of a shock;
an airbag pocket section (10) that includes an inflation absorbing section (13) which expands in the event of a shock so as to protect a passenger sitting on a seat from a side when a gas is introduced into the inflation absorbing section (13), and a gas introduction section (14) which connects the inflation absorbing section (13) with the inflator (11), the airbag pocket section (10) being accommodated in an upper portion of a vehicle body opening section in a folded state and expanding in a downward direction when the high-pressure gas generated from the inflator (11) is introduced into the airbag pocket section (10),
**characterized in that**
the vehicle airbag device (1) further comprises:
a separation section (20) constituted of a notch portion (20) that is formed by notching an end of the airbag pocket section (10) toward a center thereof, that is provided at an end of the airbag pocket section (10) along the vehicle body opening section, and that separates the inflation absorbing section (13) from the gas introduction section (14), wherein said notch portion (20) comprises an upper edge section adjacent to the gas introduction section (14) of the separation section (20), and a lower edge section adjacent to the inflation absorbing section (13); and
a connection section (21) constituted of a band-shaped cloth (21) that has a first side (21a) and a second side (21b) and is formed so as to be separated from a base cloth of the airbag pocket section (10), that connects the upper edge section with the lower edge section in a suspending manner, wherein
the first side (21a) of the band-shaped cloth (21) is connected to the upper edge section and the second side (21 b) of the band-shaped cloth (21) is connected to the lower edge section in such a way that the upper and lower edge sections are connected to end portions of the same surface of the band-shaped cloth (21) and that the two end portions are facing in the same direction so that the band-shaped cloth (21) extends in a flat plate shape without a twist from the state where the center of the band-shaped cloth (21) is bent at the time when the airbag pocket section (10) is expanded.

2. The vehicle according to claim 1, further comprising:
a control chamber (16, 17) provided at the airbag pocket section (10) and connected to the inflation absorbing section (13), wherein
a pressure of the gas introduced into the control chamber (16, 17) is regulated at an early stage of the expansion of the airbag pocket section (10), and wherein
a pressure of the gas introduced into the control chamber (16, 17) increases at a late stage of the expansion of the airbag pocket section (10), and the control chamber (16, 17) buffers pressure increase in the inflation absorbing section (13).

3. The vehicle according to claim 1 or 2, wherein the band-shaped cloth (21) is formed of a fabric having strength larger than that of the base cloth of the airbag pocket section (10).

4. The vehicle according to claim 1, wherein
the band-shaped cloth (21) includes a central bent portion (21 c) that is positioned substantially at a central area in a longitudinal direction of the band-shaped cloth (21), and the notch portion (20) includes a peripheral portion (20a), and wherein
the central bent portion (21 c) is disposed so as to be closer to the end of the airbag pocket section (10) than the peripheral portion (20a) of the notch portion (20).

## Patentansprüche

1. Fahrzeug mit einer vorhangartigen Fahrzeugairbagvorrichtung, wobei die Fahrzeugairbagvorrichtung (1) umfasst:
einen Inflator (11), der im Falle eines Stoßes Hochdruckgas erzeugt;
einen Airbagtaschenabschnitt (10), der einen Inflationsabsorptionsabschnitt (13) enthält, der im Falle eines Stoßes expandiert, um einen auf einem Sitz sitzenden Insassen von der Seite her zu schützen, wenn Gas in den Inflationsabsorptionsabschnitt (13) eingeleitet wird, sowie einen Gaseinleitungsabschnitt (14), der den Inflationsabsorptionsabschnitt (13) mit dem Inflator (11) verbindet, wobei der Airbagtaschenabschnitt (10) im gefalteten Zustand in einem oberen Abschnitt eines Fahrzeugkarosserieöffnungsabschnitts untergebracht ist und in abwärtiger Richtung expandiert, wenn von dem Inflator (11) erzeugtes Hochdruckgas in den Airbagtaschenabschnitt (10) eingeleitet wird,
**dadurch gekennzeichnet, dass** die Fahrzeugairbagvorrichtung (1) ferner umfasst:
einen Trennabschnitt (20), der aufgebaut ist aus einem Kerbabschnitt (20), der durch Einkerben von einem Ende des Airbagtaschenabschnitts (10) zu dessen Mitte hin ausgebildet ist, der an einem Ende des Airbagtaschenabschnitts (10) entlang dem Fahrzeugkarosserieöffnungsabschnitts vorgesehen ist und der den Inflationsabsorptionsabschnitt (13) von dem Gaseinleitungsabschnitt (14) trennt, worin der Kerbabschnitt (20) einen oberen Randabschnitt benachbart dem Gaseinleitungsabschnitt (14) des Trennabschnitts (20) sowie einen unteren Randabschnitt benachbart dem Inflationsabsorptionsabschnitt (13) aufweist; und
einen Verbindungsabschnitt (21), der aus einem bandförmigen Tuch (21) aufgebaut ist, das eine erste Seite (21a) und eine zweite Seite (21 b) aufweist und so ausgebildet ist, dass es von einem Basistuch des Airbagtaschenabschnitts (10) getrennt ist, das den oberen Randabschnitt mit dem unteren Randabschnitt nach Art einer Aufhängung verbindet, worin
die erste Seite (21a) des bandförmigen Tuchs (21) mit dem oberen Randabschnitt verbunden ist und die zweite Seite (21 b) des bandförmigen Tuchs (21) mit dem unteren Randabschnitt derart verbunden ist, dass die oberen und unteren Randabschnitte mit Endabschnitten der gleichen Oberfläche des bandförmigen Tuchs (21) verbunden sind, und dass die zwei Endabschnitte in die gleiche Richtung weisen, so dass sich das bandförmige Tuch (21) in einer flachen ebenen Form ohne Verdrehung erstreckt, von dem Zustand, wo die Mitte des bandförmigen Tuchs (21) zu der Zeit geknickt wird, wenn der Airbagtaschenabschnitt (10) expandiert wird.

2. Das Fahrzeug nach Anspruch 1, ferner umfassend:
eine Steuerkammer (16, 17), die an dem ersten Airbagtaschenabschnitt (10) vorgesehen und mit dem Inflationsabsorptionsabschnitt (13) verbunden ist, worin
der Druck des in die Steuerkammer (16, 17) eingeleiteten Gases zu einer frühen Stufe der Expansion des Airbagtaschenabschnitts (10) reguliert wird, und worin
ein Druck des in die Steuerkammer (16, 17) eingeleiteten Gases zu einer späteren Expansionsstufe des Airbagtaschenabschnitts (10) zunimmt und die Steuerkammer (16, 17) den Druckanstieg in dem Inflationsabsorptionsabschnitt (13) puffert.

3. Das Fahrzeug nach Anspruch 1 oder 2, worin das bandförmige Tuch (21) aus einem Tuch gebildet ist, das eine höhere Festigkeit als jene des Basistuchs des Airbagtaschenabschnitts (10) hat.

4. Das Fahrzeug nach Anspruch 1, worin
das bandförmige Tuch (21) einen zentralen geknickten Abschnitt (21 c) enthält, der im Wesentlichen am Mittelbereich in Längsrichtung des bandförmigen Tuchs (21) angeordnet ist, und der Kerbabschnitt (20) einen peripheren Abschnitt (20a) enthält, und worin
der zentrale geknickte Abschnitt (21 c) näher am Ende des Airbagtaschenabschnitts (10) angeordnet ist als der periphere Abschnitt (20a) des Kerbabschnitts (20).

## Revendications

1. Véhicule ayant un dispositif de coussin gonflable de sécurité de véhicule de type rideau, le dispositif de coussin gonflable de sécurité de véhicule (1) comprenant :
un gonfleur (11) qui génère un gaz haute pression en cas de choc ;
une section de poche de coussin gonflable de sécurité (10) qui comprend une section d'absorption de gonflage (13) qui se déploie en cas de choc de façon à protéger un passager assis sur un siège depuis un côté lorsqu'un gaz est introduit dans la section d'absorption de gonflage (13) et une section d'introduction de gaz (14) qui raccorde la section d'absorption de gonflage (13) au gonfleur (11), la section de poche de coussin gonflable de sécurité (10) étant logée dans une portion supérieure d'une section d'ouverture de carrosserie de véhicule dans un état plié et se déployant dans une direction vers le bas lorsque le gaz haute pression généré par le gonfleur (11) est introduit dans la section de poche du coussin gonflable de sécurité (10),
**caractérisé en ce que**
le dispositif de coussin gonflable de sécurité (1) comprend en outre :
une section de séparation (20) constituée d'une portion d'encoche (20) qui est formée en faisant une encoche dans une extrémité de la section de poche de coussin gonflable de sécurité (10) vers un centre de cette dernière, qui est agencée à une extrémité de la section de poche du coussin gonflable de sécurité (10) le long de la section d'ouverture carrosserie de véhicule, et qui sépare la section d'absorption de gonflage (13) de la section d'introduction de gaz (14), dans lequel ladite portion d'encoche (20) comprend une section de bord supérieure adjacente à la section d'introduction de gaz (14) de la section de séparation (20), et une section de bord inférieure adjacente à la section d'absorption de gonflage (13) ; et
une section de raccordement (21) constituée d'une étoffe en forme de bande (21) qui a un premier côté (21a) et un second côté (21b) et est formée de façon à être séparée d'une étoffe de base de la section de poche de coussin gonflable de sécurité (10), qui relie la section de bord supérieure à la section de bord inférieure de façon suspendue, dans lequel
le premier côté (21a) de l'étoffe en forme de bande (21) est raccordé à la section de bord supérieure et le second côté (21b) de l'étoffe en forme de bande (21) est raccordé à la section de bord inférieure de telle sorte que les sections de bord supérieure et inférieure sont raccordées à des portions d'extrémité de la même surface de l'étoffe en forme de bande (21) et que les deux portions d'extrémité font face dans la même direction de sorte que l'étoffe en forme de bande (21) se déploie en forme de plaque plate sans torsion depuis l'état où le centre de l'étoffe en forme de bande (21) est courbé au moment où la section de poche de coussin gonflable de sécurité (10) est déployée.

2. Véhicule selon la revendication 1, comprenant en outre :
une chambre de commande (16, 17) agencée au niveau de la section de poche du coussin gonflable de sécurité (10) et raccordée à la section d'absorption de gonflage (13), dans lequel
une pression du gaz introduit dans la chambre de commande (16, 17) est régulée à une étape précoce du déploiement de la section de poche du coussin gonflable de sécurité (10), et dans lequel
une pression du gaz introduit dans la chambre de commande (16, 17) augmente à une étape tardive du déploiement de la section de poche du coussin gonflable de sécurité (10), et la chambre de commande (16, 17) amortit l'augmentation de pression dans la section d'absorption de gonflage (13).

3. Véhicule selon la revendication 1 ou 2, dans lequel l'étoffe en forme de bande (21) est formée d'un tissu ayant une résistance supérieure à celle de l'étoffe de base de la section de poche du coussin gonflable de sécurité (10).

4. Véhicule selon la revendication 1, dans lequel
l'étoffe en forme de bande (21) comprend une portion courbée centrale (21c) qui est positionnée sensiblement au niveau d'une aire centrale dans une direction longitudinale de l'étoffe en forme de bande (21) et la portion d'encoche (20a) comprend une portion périphérique (20a), et dans lequel
la portion courbée centrale (21c) est disposée de façon à être plus proche de l'extrémité de la section de poche du coussin gonflable de sécurité (10) que la portion périphérique (20a) de la portion d'encoche (20).
